# EUROPÄISCHE PATENTSCHRIFT

(11) **EP 3 812 307 B1**
(45) Veröffentlichungstag und Bekanntmachung des Hinweises auf die Patenterteilung: **15.03.2023**
(21) Anmeldenummer: 19205238.9
(22) Anmeldetag: 25.10.2019
(51) Int. Cl.: B65G 1/04, B65G 57/30

(54) **STAPELLAGERANORDNUNG**
STACK STORAGE ASSEMBLY
DISPOSITIF DE STOCKAGE PAR EMPILEMENT

(43) Veröffentlichungstag der Anmeldung: 28.04.2021
(73) Patentinhaber: Jungheinrich Aktiengesellschaft, 22047 Hamburg (DE)
(72) Erfinder: Cavelius, Jörg, 61118 Bad Vilbel (DE); Becker, Michael, 63512 Hainburg (DE); Liebhaber, Markus, 61440 Oberursel (DE)
(74) Vertreter: Keil & Schaafhausen Patentanwälte PartGmbB

(56) Entgegenhaltungen:
- EP-A1- 0 458 021
- EP-A1- 3 183 190
- DE-A1- 19 540 855
- DE-A1-102012 020 899
- JP-A- S6 071 402
- JP-B1- 6 592 711
- US-B2- 10 112 774

## Beschreibung

Die vorliegende Erfindung betrifft eine Stapellageranordnung nach dem Oberbegriff des Anspruchs 1.

Eine derartige Stapellageranordnung ist aus JP S6071402 A bekannt.

In einer Stapellageranordnung werden Behälter jeweils in Stapeln angeordnet. Die Stapel der Behälter sind in Reihen hintereinander und in Spalten nebeneinander angeordnet, so dass die Anordnung der Stapel nach Art einer Matrix aufgebaut ist. Zur Aufnahme eines Stapels derartiger Behälter ist jeweils ein Behälteraufnahmeraum vorgesehen.

Wenn man die Behälteraufnahmeräume von unten beschickt und die Behälter auch nach unten wieder aus den Behälteraufnahmeräumen entnimmt, dann kann man ein dazu verwendetes Beschickungsfahrzeug in dem Beschickungsraum bewegen, der unterhalb der Behälteraufnahmeräume angeordnet ist. Dies hat den Vorteil, dass die Stapellageranordnung nicht noch zusätzlich das Gewicht von einem oder mehreren Beschickungsfahrzeugen aufnehmen muss. Der konstruktive Aufwand für eine derartige Stapellageranordnung kann also klein gehalten werden.

Der Erfindung liegt die Aufgabe zugrunde, den Betrieb einer Stapellageranordnung wirtschaftlich zu gestalten.

Diese Aufgabe wird mit einer Stapellageranordnung nach Anspruch 1 gelöst. Damit kann man Behälter nicht nur in einer Reihe transportieren, sondern auch zwischen Reihen verfahren. Das Beschickungsfahrzeug kann also beispielsweise einen Behälter aus einem Behälteraufnahmeraum einer Reihe entnehmen, ihn dann mit Hilfe der Quertransporteinrichtung zu einer Position bewegen, die einer anderen Reihe zugeordnet ist, und den Behälter dann in dieser anderen Reihe einlagern. Dementsprechend ist es nicht erforderlich, dass man jeder Reihe ein eigenes Beschickungsfahrzeug zuordnet, wenngleich dies möglich ist.

Vorzugsweise ist die Quertransporteinrichtung außerhalb des Beschickungsraums angeordnet. Die Quertransporteinrichtung blockiert dann nicht den Zugang zu einem Behälteraufnahmeraum. Der Raum, der für das Stapeln der Behälter zur Verfügung steht, wird damit gut ausgenutzt.

Die Quertransporteinrichtung weist einen ersten Einfahr-/Ausfahrzugang für das Beschickungsfahrzeug, der zu dem Beschickungsraum hin gerichtet ist, und einen zweiten Einfahr-/Ausfahrzugang für das Beschickungsfahrzeug, der von dem Beschickungsraum weg gerichtet ist, auf. Man kann das Beschickungsfahrzeug also nicht nur von einer Reihe zu einer anderen Reihe transportieren, sondern man kann das Beschickungsfahrzeug auch von dem Beschickungsraum wegfahren lassen, beispielsweise um es mit einem Behälter zu beladen oder dem Behälter zu entnehmen oder um Produkte in den Behälter einzulagern oder Produkte aus dem Behälter zu entnehmen.

Auf der dem Beschickungsraum abgewandten Seite der Quertransporteinrichtung ist mindestens eine Einlager/Auslager-Anordnung angeordnet ist. In einer Einlager/Auslager-Anordnung kann man dann das teilweise oder vollständige Beladen oder Entladen der Behälter vornehmen.

Die Anzahl der Einlager-/Auslager-Anordnungen ist kleiner ist als die Anzahl der Reihen. In der Einlager/Auslager-Anordnung ist vielfach eine Bedienungsperson oder ein Handhabungsautomat, z. B. ein Roboter, erforderlich, die das Einlagern von Produkten in den Behälter oder die Entnahme von Produkten aus dem Behälter vornimmt. Wenn man in der Stapellageranordnung eine Vielzahl von Produkten vorrätig halten möchte und dafür eine entsprechend große Anzahl von Behältern benötigt, kann es sein, dass man eine große Anzahl von Reihen in der Stapellageranordnung verwenden muss. Durch die Quertransporteinrichtung kann man dann gleichwohl die Zahl der Einlager/Auslager-Anordnungen begrenzen, um Kosten zu sparen.

Vorzugsweise weist mindestens eine Einlager/Auslager-Anordnung mindestens eine Behälterübergabeposition zur Übergabe eines Behälters von der Einlager/Auslager-Anordnung zum Beschickungsfahrzeug oder umgekehrt auf. Damit wird eine erhöhte Sicherheit für einen Benutzer oder eine Bedienungsperson geschaffen. Bevor die Bedienungsperson in den Behälter eingreifen kann, um ein Produkt oder allgemein ein eingelagertes Gut zu entnehmen oder das Produkt in den Behälter einzulagern, wird der Behälter vom Beschickungsfahrzeug entnommen. Erst dann, wenn kein Eingriff einer Bedienungsperson mehr erforderlich ist, wird der Behälter vom Beschickungsfahrzeug abgeholt oder er wird vom Beschickungsfahrzeug in die Einlager/Auslager-Anordnung eingefahren.

Auch ist von Vorteil, wenn die Behälterübergabeposition eine Ablage aufweist, unter der eine Einfahrfläche für das Beschickungsfahrzeug angeordnet ist. Das Beschickungsfahrzeug kann in die Einfahrfläche einfahren und den Behälter dann auf der Ablage ablegen. Hierzu kann das Beschickungsfahrzeug beispielsweise eine höhenveränderbare Behälteraufnahme aufweisen. Wenn die Behälteraufnahme abgesenkt wird, dann kann der Behälter an die Ablage übergeben werden. Eine höhenveränderbare Behälteraufnahme ist ohnehin von Vorteil, wenn man die Behälter von unten in die Behälteraufnahmeräume einbringen will.

Vorzugsweise ist an jedem Ende der Reihen jeweils eine Quertransporteinrichtung angeordnet. Damit lässt sich eine flexible Steuerung der Stapellageranordnung erreichen. Wenn die Quertransporteinrichtung an einem Ende durch ein Beschickungsfahrzeug belegt ist, kann ein anderes Beschickungsfahrzeug am anderen Ende zwischen den Reihen verfahren werden.

Vorzugsweise weist die Quertransporteinrichtung einen Quertransportwagen auf. Das Beschickungsfahrzeug muss dann nur auf den Quertransportwagen aufgebracht werden, um zwischen Reihen verfahren zu werden. Dies ist eine relativ einfache Lösung.

Vorzugsweise ist der Quertransportwagen auf einer ersten Fahrfläche verfahrbar, die in Schwerkraftrichtung niedriger angeordnet ist, als eine zweite Fahrfläche, auf der der Beschickungswagen im Beschickungsraum verfahrbar ist. In diesem Fall kann man das Beschickungsfahrzeug stufenfrei auf den Quertransportwagen fahren. Die erste Fahrfläche und die zweite Fahrfläche stören sich dann nicht.

Hierbei ist bevorzugt, dass die erste Fahrfläche als Schienenanordnung ausgebildet ist. Mit einer Schienenanordnung lässt sich problemlos eine zuverlässige Führung des Quertransportwagens erreichen. Auch die zweite Fahrfläche kann als Schienenanordnung ausgebildet sein, bei der die Schienen an Ständern befestigt sind, die eine Halteeinrichtung halten, mit der die Behälterstapel oberhalb des Beschickungsraums festgehalten werden.

Vorzugsweise ist eine Steuereinrichtung vorgesehen, die eine Position eines Behälters in den Behälteraufnahmeräumen in Abhängigkeit von einer Umschlagshäufigkeit des Behälters festlegt. Ein Behälter dient, wie oben bereits erwähnt, zur Aufnahme von Produkten. Hierbei gibt es Produkte, die häufiger benötigt werden als andere Produkte. Ein Behälter, der die häufig benötigten Produkte enthält, hat eine höhere Umschlagshäufigkeit als ein Behälter, der weniger oft benötigte Produkte enthält. Dementsprechend kann man die Wege für die häufig benutzten Produkte kurzhalten.

Vorzugsweise legt die Steuereinrichtung die Position eines Behälters mit einer hohen Umschlagshäufigkeit in einem unteren Bereich eines Behälteraufnahmeraums fest. Da die Beschickung und die Entnahme eines Behälteraufnahmeraums von unten erfolgt, sind dann weniger Schritte erforderlich, um zu dem Behälter mit der höheren Umschlagshäufigkeit zu gelangen. Dies spart Zeit und erhöht damit die Wirtschaftlichkeit beim Betrieb der Stapellageranordnung.

Auch kann vorgesehen sein, dass die Steuereinrichtung die Position eines Behälters mit einer hohen Umschlagshäufigkeit in einer Spalte festlegt, die näher an einem Ende einer Reihe liegt, als die Position eines Behälters mit niedriger Umschlagshäufigkeit. Dementsprechend muss das Beschickungsfahrzeug einen kürzeren Weg zurücklegen, wenn es einen Behälter mit einer hohen Umschlagshäufigkeit erreichen soll.

Vorteilhafterweise ermittelt die Steuereinrichtung die Umschlagshäufigkeit von Behältern dynamisch im Betrieb. Vielfach ist es bekannt, welche Produkte häufig benötigt werden. Wenn dies nicht von vorneherein bekannt ist, kann die Steuereinrichtung die Umschlagshäufigkeit eines Behälters im Betrieb ermitteln, beispielsweise indem sie die Zugriffe auf den Behälter zählt. Dies kann dazu führen, dass die Behälter im Laufe der Zeit umgestapelt werden, also ihre Position geändert wird. Eine derartige Änderung der Positionen kann jedoch ohne größeren Aufwand im Betrieb erfolgen.

Die Erfindung wird im Folgenden anhand eines Ausführungsbeispiels in Verbindung mit der Zeichnung beschrieben. Hierin zeigen:
- Fig. 1: eine schematische Darstellung einer Stapellageranordnung in Draufsicht,
- Fig. 2: eine schematische Ansicht der Stapellageranordnung von Fig. 1 von der Seite,
- Fig. 3: eine vergrößerte schematische Darstellung einer Quertransporteinrichtung.

In allen Figuren sind gleiche Elemente mit den gleichen Bezugszeichen versehen.

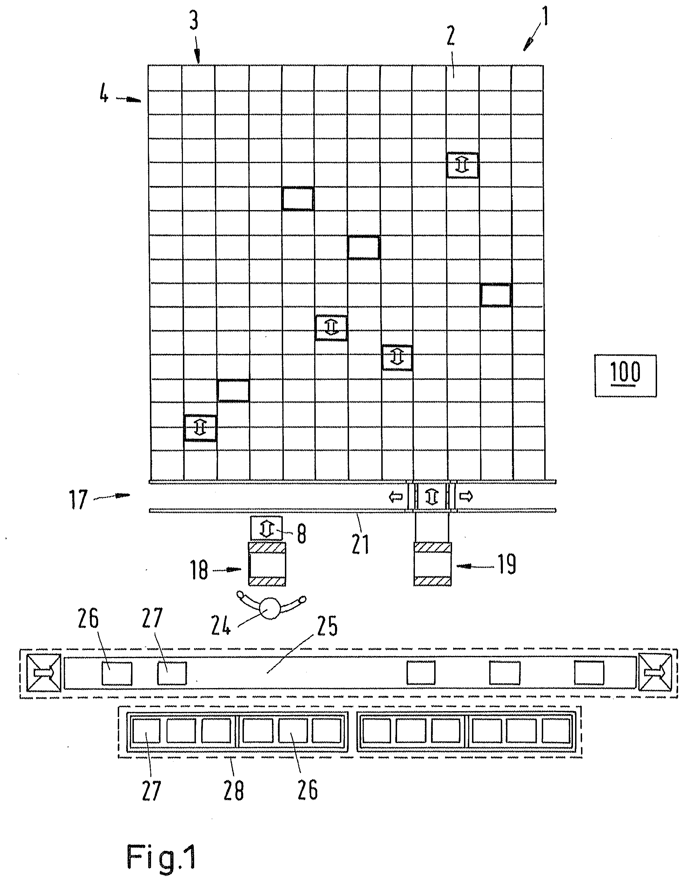

Fig. 1 zeigt schematisch eine Stapellageranordnung 1 mit mehreren Behälteraufnahmeräumen 2, die in mehreren Reihen 3 und mehreren Spalten 4 angeordnet sind. Die Behälteraufnahmeräume 2 sind also in Draufsicht nach Art einer Matrix mit Reihen 3 und Spalten 4 angeordnet, wobei sich jeder Behälteraufnahmeraum 2 am Schnittpunkt einer Reihe 3 mit einer Spalte 4 befindet. Die Reihen 3 und die Spalten 4 müssen nicht unbedingt alle gleich lang sein.

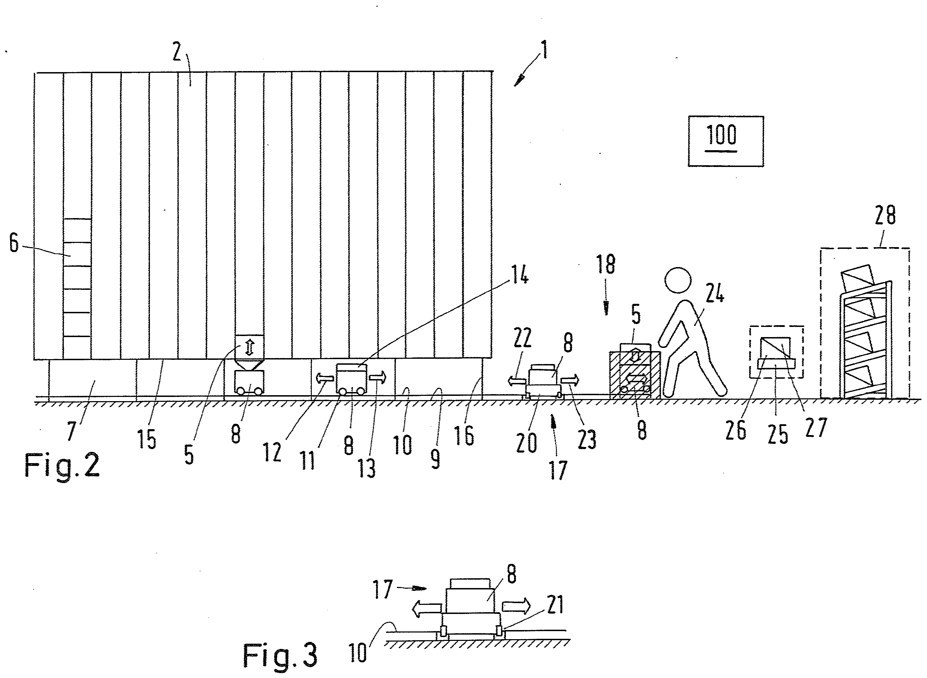

In jedem Behälteraufnahmeraum 2 können mehrere Behälter 5 übereinander angeordnet werden und zwar in Form eines Stapels 6, wie dies in Fig. 2 dargestellt ist.

Unterhalb der Behälteraufnahmeräume 2 ist ein Beschickungsraum 7 angeordnet, in dem ein oder mehrere Beschickungsfahrzeuge 8 verfahrbar sind. Die Beschickungsfahrzeuge 8 können dabei auf einem Fußboden 9 verfahren werden oder, wie dargestellt, auf einer Fahrbahn 10, die auf dem Fußboden 9 oder mit einem Abstand zum Fußboden 9 angeordnet ist. Die Fahrbahn 10 kann als durchgehende Fläche ausgebildet sein. Sie kann aber auch als Schienenanordnung ausgebildet sein, auf der Räder 11 des Beschickungsfahrzeugs 8 abrollen können.

Das Beschickungsfahrzeug 8 ist in entgegengesetzte Richtungen bewegbar, wie dies durch Pfeile 12, 13 dargestellt ist. Allerdings kann das Beschickungsfahrzeug 8 im Beschickungsraum 7 nur in Richtung einer Reihe 3 bewegt werden. Das Beschickungsfahrzeug 8 ist also ausschließlich unter Behälteraufnahmeräumen 2 einer Reihe 3 verfahrbar.

Das Beschickungsfahrzeug 8 kann innerhalb der Reihe 3 einen Behälter 5 von einer Spalte 4 zu einer anderen Spalte 4 transportieren, um einen Behälter umzulagern.

Eine Hauptaufgabe des Beschickungsfahrzeugs 8 besteht darin, einen Behälter 5 in die Stapellageranordnung 1 einzubringen oder einen Behälter 5 aus der Stapellageranordnung 1 zu entnehmen.

Beim Einbringen transportiert das Beschickungsfahrzeug 8 den Behälter 5 in eine Position unterhalb eines Behälteraufnahmeraums 2 und hebt den Behälter 5 an. Hierzu weist das Beschickungsfahrzeug 8 eine höhenveränderbare Behälteraufnahme 14 auf. Sobald der Behälter 5 zur Anlage an den Stapel 6 kommt, wird der Stapel 6 mitangehoben und der Behälter 5 mit dem Stapel 6 wird weiter angehoben, bis er eine Halteeinrichtung 15 passiert hat, mit der der untere Behälter 5 im notwendigen Abstand über der Fahrbahn 10 gehalten wird. Die Halteeinrichtung 15 ist beispielweise an Ständern 16 befestigt, die auf dem Fußboden 9 aufstehen.

Zum Entnehmen eines Behälters 5 aus der Stapellageranordnung 1 wird das Beschickungsfahrzeug 8 wiederum unter den Behälteraufnahmeraum 2 gefahren und die Behälteraufnahme 14 des Beschickungsfahrzeugs 8 wird angehoben, bis sie in Kontakt mit dem unteren Behälter 5 eines Stapels 6 kommt. Der Behälter 5 mit dem Stapel 6 wird angehoben. Die Halteeinrichtung 15 kann dann gelöst werden. Der Behälter 5 mit dem Stapel 6 wird abgesenkt. Dabei kommt die Halteeinrichtung 15 in Eingriff mit dem bis dahin zweiten Behälter des Stapels 6 von unten, so dass der verbleibende Stapel 6 im Behälteraufnahmeraum 2 gehalten wird. Der zu entnehmende Behälter 5 kann dann mit dem Beschickungsfahrzeug 8 aus der Stapellageranordnung 1 herausgefahren werden.

Eine Steuereinrichtung 100, die mit dem Beschickungsfahrzeug 8 leitungslos oder auch über Leitungen verbunden sein kann, steuert das Beschickungsfahrzeug 8 so, dass es die notwendigen Aufgaben, also das Einlagern, Auslagern oder Umlagern von Behältern 5 in der jeweiligen Reihe 3 erfüllen kann. Da sich die Bewegung des Beschickungsfahrzeugs 8 darauf beschränkt, in einer Reihe 3 hin- und herzufahren, kann die Steuereinrichtung 100 mit relativ einfachen Algorithmen arbeiten.

Um einen Transport eines Behälters 5 auch von einer Reihe zur anderen oder allgemein parallel zu den Spalten 4 zu ermöglichen, ist an mindestens einer Stirnseite der Reihen 3 eine Quertransporteinrichtung 17 vorgesehen, mit der das Beschickungsfahrzeug 8 zwischen Positionen verfahrbar ist, die jeweils einer Reihe 3 zugeordnet sind.

Darüber hinaus ist es mit der Quertransporteinrichtung 17 möglich, das Beschickungsfahrzeug 8 zu Positionen zu transportieren, die jeweils einer Einlager/Auslager-Anordnung 18, 19 zugeordnet sind. Eine einer Einlager/Auslager-Anordnung 18, 19 zugeordnete Position kann mit einer einer Reihe 3 zugeordneten Position übereinstimmen. Dies ist jedoch nicht zwingend.

Die Quertransporteinrichtung 17 weist einen Quertransportwagen 20 auf, der auf Schienen 21 verfahrbar ist, die eine erste Fahrfläche bilden. Die Fahrbahn 10 bildet eine zweite Fahrfläche. Wie man in Fig. 3 erkennen kann, ist die erste Fahrfläche, nämlich die Schiene 21, in Schwerkraftrichtung niedriger angeordnet als die zweite Fahrfläche, die durch die Fahrbahn 10 gebildet ist. Somit kann der Beschickungswagen 8 problemlos von der Fahrbahn 10 auf die Schienenanordnung 21 verfahren werden.

Die Quertransporteinrichtung 17 weist einen ersten Einfahr/Ausfahrzugang für das Beschickungsfahrzeug 8 auf, der zu dem Beschickungsraum 7 hin gerichtet ist. Dementsprechend kann das Beschickungsfahrzeug 8 von dem Beschickungswagen 20 in Richtung des Pfeils 22 wegbewegt werden. Der Beschickungswagen 8 kann (entgegengesetzt zur Richtung des Pfeiles 22) auf den Quertransportwagen 20 aufgefahren werden.

Die Quertransporteinrichtung 17 weist einen zweiten Einfahr-/Ausfahrzugang für das Beschickungsfahrzeug 8 auf, der von dem Beschickungsraum 7 weggerichtet ist. Dies ist durch den Pfeil 23 verdeutlicht. Über den zweiten Einfahr-/Ausfahrzugang kann das Beschickungsfahrzeug die Einlager/Auslager-Anordnungen 18, 19 erreichen.

Wie man in Fig. 1 erkennen kann, ist die Anzahl der Einlager/Auslager-Anordnungen 18, 19 kleiner als die Anzahl der Reihen 3.

In Fig. 2 ist dargestellt, dass eine Bedienungsperson 24 Zugriff auf einen Behälter 5 hat, der auf einem Beschickungsfahrzeug 8 angeordnet ist.

Man kann jedoch (nicht dargestellt) auch vorsehen, dass mindestens eine Einlager/Auslager-Anordnung 18, 19 mindestens eine Behälterübergabeposition zur Übergabe eines Behälters von der Einlager/Auslager-Anordnung zum Beschickungsfahrzeug 8 oder umgekehrt aufweist. Hierzu weist die Behälterübergabeposition zweckmäßigerweise eine Ablage auf, unter der eine Einfahrfläche für das Beschickungsfahrzeug 8 angeordnet ist. Wenn das Beschickungsfahrzeug 8 in die Behälterübergabeposition einfährt, ist der Behälter 5 durch die höhenveränderbare Behälteraufnahme 14 angehoben. Das Beschickungsfahrzeug 8 kann dann die Behälteraufnahme 14 absenken und den Behälter auf der Ablage ablegen. Das Beschickungsfahrzeug 8 ist frei und kann für weitere Einlager- oder Auslagervorgänge oder auch für Umlagervorgänge verwendet werden.

In Fig. 2 ist eine einzige Quertransportvorrichtung 17 vorgesehen. Man kann jedoch auch eine zweite Quertransportvorrichtung 17 am anderen Ende der Reihen 3 anordnen.

In jedem Fall ist es zweckmäßig, wenn die Quertransporteinrichtung 17 außerhalb des Beschickungsraums 7 angeordnet ist. In diesem Fall stehen alle Behälteraufnahmeräume 2 zur Aufnahme von Behältern zur Verfügung.

Die Steuereinrichtung 100 kann nun die Position eines Behälters 5 in den Behälteraufnahmeräumen 2 in Abhängigkeit von einer Umschlagshäufigkeit des Behälters 5 festlegen. Ein Behälter 5, der häufig benötigt wird, wird dann zweckmäßigerweise in einem unteren Bereich eines Behälteraufnahmeraums 2 angeordnet. Die Steuereinrichtung legt also die Position dieses Behälters 5 im unteren Bereich eines Behälteraufnahmeraums 2 fest.

Wenn ein derartiger Behälter 5 benötigt wird, muss entweder gar kein anderer Behälter zuvor aus dem Behälteraufnahmeraum 2 entnommen werden oder es muss eine geringe Anzahl von Behältern aus dem Behälteraufnahmeraum 2 entnommen werden, bevor der gewünschte Behälter 5 zugänglich ist.

Man kann auch vorsehen, dass die Steuereinrichtung 100 die Position eines Behälters mit einer hohen Umschlagshäufigkeit in einer Spalte 4 festlegt, die näher an einem Ende einer Reihe 3 liegt als die Position eines Behälters mit niedriger Umschlagshäufigkeit. Dann sind die Wege, die das Beschickungsfahrzeug 8 zurücklegen muss, um den jeweiligen Beschickungsraum 2 zu erreichen, kürzer.

Vielfach ist die Umschlagshäufigkeit eines Behälters 5 bekannt. Wenn dies nicht der Fall ist, dann kann die Steuereinrichtung 100 die Umschlagshäufigkeit von Behältern 5 dynamisch im Betrieb ermitteln, beispielsweise dadurch, dass sie zählt, wie oft ein Behälter in die Einlager/Auslagerposition 18, 19 verbracht wird.

Auf der dem Beschickungsraum 7 abgewandten Seite der Einlager-/Auslagerpositionen 18, 19 kann noch ein Transferelement 25 vorgesehen sein, auf dem Quellbehälter 26 antransportiert werden können, in dem sich Produkte oder Gegenstände befinden, die in die Behälter 5 eingelagert werden sollen. Auch Auftragsbehälter 27 können über das Transferelement 25 antransportiert oder wegtransportiert werden, in die Gegenstände oder Produkte eingebracht werden können, die aus dem Behälter 5 entnommen werden.

Auch ist es möglich, eine Regalanordnung 28 zu verwenden, in der Quellbehälter 26 oder Auftragsbehälter 27 bereitgehalten werden können.

## Patentansprüche

1. Stapellageranordnung (1) mit mindestens einem Beschickungsfahrzeug und mehreren Behälteraufnahmeräumen (2), die in mehreren Reihen (3) und Spalten (4) angeordnet sind und zur Aufnahme von Stapeln (6) von Behältern (5) ausgebildet sind, wobei unter den Behälteraufnahmeräumen (2) ein Beschickungsraum (7) angeordnet ist, in dem das mindestens eine Beschickungsfahrzeug (8) verfahrbar ist, wobei eine Quertransporteinrichtung (17) vorgesehen ist, mit der das Beschickungsfahrzeug (8) zwischen Positionen verfahrbar ist, die jeweils einer Reihe (3) zugordnet sind, wobei die Quertransporteinrichtung (17) einen ersten Einfahr/Ausfahrzugang (22) für das Beschickungsfahrzeug (8), der zu dem Beschickungsraum (7) hin gerichtet ist, aufweist, **dadurch gekennzeichnet, dass** die Quertransporteinrichtung (17) einen zweiten Einfahr/Ausfahrzugang (23) für das Beschickungsfahrzeug (8), der von dem Beschickungsraum (7) weg gerichtet ist, aufweist, wobei auf der dem Beschickungsraum (7) abgewandten Seite der Quertransporteinrichtung (17) mindestens eine Einlager/Auslager-Anordnung (18, 19) angeordnet ist und die Anzahl der Einlager/Auslager-Anordnungen (18, 19) kleiner ist als die Anzahl der Reihen (3).

2. Stapellageranordnung nach Anspruch 1, **dadurch gekennzeichnet, dass** die Quertransporteinrichtung (17) außerhalb des Beschickungsraums (7) angeordnet ist.

3. Stapellageranordnung nach Anspruch 1 oder 2, **dadurch gekennzeichnet, dass** mindestens eine Einlager/Auslager-Anordnung mindestens eine Behälterübergabeposition zur Übergabe eines Behälters von der Einlager/Auslager-Anordnung (18, 19) zum Beschickungsfahrzeug (8) oder umgekehrt aufweist.

4. Stapellageranordnung nach Anspruch 3, **dadurch gekennzeichnet, dass** die Behälterübergabeposition eine Ablage aufweist, unter der eine Einfahrfläche für das Beschickungsfahrzeug (8) angeordnet ist.

5. Stapellageranordnung nach einem der Ansprüche 1 bis 4, **dadurch gekennzeichnet, dass** an jedem Ende der Reihen (3) jeweils eine Quertransporteinrichtung (17) angeordnet ist.

6. Stapellageranordnung nach einem der Ansprüche 1 bis 5, **dadurch gekennzeichnet, dass** die Quertransporteinrichtung (17) einen Quertransportwagen (20) aufweist.

7. Stapellageranordnung nach Anspruch 6, **dadurch gekennzeichnet, dass** der Quertransportwagen (20) auf einer ersten Fahrfläche verfahrbar ist, die in Schwerkraftrichtung niedriger angeordnet ist, als eine zweite Fahrfläche, auf der der Beschickungswagen (8) im Beschickungsraum (7) verfahrbar ist.

8. Stapellageranordnung nach Anspruch 7, **dadurch gekennzeichnet, dass** die erste Fahrfläche als Schienenanordnung (21) ausgebildet ist.

9. Stapellageranordnung nach einem der Ansprüche 1 bis 8, **dadurch gekennzeichnet, dass** eine Steuereinrichtung (100) vorgesehen ist, die eine Position eines Behälters (5) in den Behälteraufnahmeräumen (2) in Abhängigkeit von einer Umschlagshäufigkeit des Behälters (5) festlegt.

10. Stapellageranordnung nach Anspruch 9, **dadurch gekennzeichnet, dass** die Steuereinrichtung (100) die Position eines Behälters (5) mit einer hohen Umschlagshäufigkeit in einem unteren Bereich eines Behälteraufnahmeraumes (2) festlegt.

11. Stapellageranordnung nach Anspruch 9 oder 10, **dadurch gekennzeichnet, dass** die Steuereinrichtung (100) die Position eines Behälters (5) mit einer hohen Umschlagshäufigkeit in einer Spalte (4) festlegt, die näher an einem Ende einer Reihe (3) liegt als die Position eines Behälters (8) mit niedriger Umschlagshäufigkeit.

12. Stapellageranordnung nach einem der Ansprüche 9 bis 11, **dadurch gekennzeichnet, dass** die Steuereinrichtung (100) die Umschlagshäufigkeit von Behältern (5) dynamisch im Betrieb ermittelt.

## Claims

1. Stack storage assembly (1) having at least one loading vehicle and a plurality of container receiving spaces (2) which are arranged in a plurality of rows (3) and columns (4) and are designed to receive stacks (6) of containers (5), a loading space (7) being arranged below the container receiving spaces (2), in which the at least one loading vehicle (8) can be moved, a transverse transport device (17) being provided, by means of which the loading vehicle (8) can be moved between positions which are each assigned to a row (3), the transverse transport device (17) comprising a first entry/exit access (22) for the loading vehicle (8), which is directed towards the loading space (7), **characterized in that** the transverse transport device (17) comprises a second entry/exit access (23) for the loading vehicle (8), which is directed away from the loading space (7), at least one storage/retrieval arrangement (18, 19) being arranged on that side of the transverse transport device (17) which faces away from the loading space (7), and the number of storage/retrieval arrangements (18, 19) being smaller than the number of rows (3).

2. Stack storage assembly according to claim 1, **characterized in that** the transverse transport device (17) is arranged outside the loading space (7).

3. Stack storage assembly according to claims 1 or 2, **characterized in that** at least one storage/retrieval arrangement comprises at least one container transfer position for transferring a container from the storing/retrieval arrangement (18, 19) to the loading vehicle (8) or vice versa.

4. Stack storage assembly according to claim 3, **characterized in that** the container transfer position comprises a shelf under which an entry surface for the loading vehicle (8) is arranged.

5. Stack storage arrangement according to any of claims 1 to 4, **characterized in that** a transverse transport device (17) is arranged at each end of the rows (3).

6. Stack storage assembly according to any of claim 1 to 5, **characterized in that** the transverse transport device (17) comprises a transverse transport carriage (20).

7. Stack storage assembly according to claim 6, **characterized in that** the transverse transport carriage (20) can travel on a first travel surface which is arranged lower in the direction of gravity than a second travel surface on which the loading vehicle (8) can travel in the loading space (7).

8. Stack storage assembly according to claim 7, **characterized in that** the first travel surface is designed as a rail arrangement (21).

9. Stack storage assembly according to any of claims 1 to 8, **characterized in that** a control device (100) is provided which determines a position of a container (5) in the container receiving spaces (2) as a function of a turnover frequency of the container (5).

10. Stack storage assembly according to claim 9, **characterized in that** the control device (100) determines the position of a container (5) with a high turnover frequency in a lower region of a container receiving space (2).

11. Stack storage assembly according to claim 9 or 10, **characterized in that** the control device (100) determines the position of a container (5) with a high turnover frequency in a column (4) which is closer to an end of a row (3) than the position of a container (8) with a low turnover frequency.

12. Stack storage assembly according to any of claims 9 to 11, **characterized in that** the control device (100) determines the turnover frequency of containers (5) dynamically during operation.

## Revendications

1. Dispositif de stockage par empilement (1) avec au moins un véhicule de chargement et plusieurs compartiments de réception de conteneurs (2), qui sont disposés en plusieurs rangées (3) et colonnes (4) et sont constitués pour loger des empilements (6) de conteneurs (5), sachant que sous les compartiments de réception de conteneurs (2) est disposé un compartiment de chargement (7) dans lequel peut être déplacé au moins un véhicule de chargement (8), sachant qu'un système de transport transversal (17) est prévu avec lequel le véhicule de chargement (8) peut être déplacé entre des positions qui sont attribuées respectivement à une rangée (3), sachant que le système de transport transversal (17) comporte un premier accès d'entrée/sortie (22) pour le véhicule de chargement (8) qui est dirigé vers le compartiment de chargement (7), **caractérisé en ce que** le système de transport transversal (17) comporte un deuxième accès d'entrée/sortie (23) pour le véhicule de chargement (8), qui est dirigé à distance du compartiment de chargement (7), sachant que sur le côté opposé au compartiment de chargement (7) du système de transport transversal (17) est disposé au moins un agencement de stockage/déstockage (18, 19) et le nombre des agencements de stockage/déstockage (18, 19) est plus faible que le nombre de rangées (3).

2. Dispositif de stockage par empilement selon la revendication 1, **caractérisé en ce que** le système de transport transversal (17) est disposé en dehors du compartiment de chargement (7).

3. Dispositif de stockage par empilement selon la revendication 1 ou 2, **caractérisé en ce qu'**au moins un agencement de stockage/déstockage comporte au moins une position de transfert de conteneurs pour le transfert d'un conteneur de l'agencement de stockage/déstockage (18, 19) au véhicule de chargement (8) ou vice versa.

4. Dispositif de stockage par empilement selon la revendication 3, **caractérisé en ce que** la position de transfert de conteneurs comporte une aire de dépôt en dessous de laquelle est disposée une surface d'entrée pour le véhicule de chargement (8).

5. Dispositif de stockage par empilement selon l'une quelconque des revendications 1 à 4, **caractérisé en ce qu'**un système de transport transversal (17) est respectivement disposé à chaque extrémité des rangées (3) .

6. Dispositif de stockage par empilement selon l'une quelconque des revendications 1 à 5, **caractérisé en ce que** le système de transport transversal (17) comporte un véhicule de transport transversal (20).

7. Dispositif de stockage par empilement selon la revendication 6, **caractérisé en ce que** le véhicule de transport transversal (20) peut être déplacé sur une première surface de déplacement, qui est disposée en direction de la gravité plus bas qu'une deuxième surface de déplacement, sur laquelle le véhicule de chargement (8) peut être déplacé dans le compartiment de chargement (7) .

8. Dispositif de stockage par empilement selon la revendication 7, **caractérisé en ce que** la première surface de déplacement est constituée sous la forme d'un système à rails (21).

9. Dispositif de stockage par empilement selon l'une quelconque des revendications 1 à 8, **caractérisé en ce qu'**un système de commande (100) est prévu, qui définit une position d'un conteneur (5) dans les compartiments de réception de conteneurs (2) en fonction d'une fréquence de rotation du conteneur (5).

10. Dispositif de stockage par empilement selon la revendication 9, **caractérisé en ce que** le système de commande (100) définit la position d'un conteneur (5) avec une fréquence de rotation élevée dans une zone inférieure d'un compartiment de réception de conteneurs (2) .

11. Dispositif de stockage par empilement selon la revendication 9 ou 10, **caractérisé en ce que** le système de commande (100) définit la position d'un conteneur (5) dans une colonne (4) avec une fréquence de rotation élevée, qui se situe à une extrémité d'une rangée (3) plus près que la position d'un conteneur avec une fréquence de rotation plus faible.

12. Dispositif de stockage par empilement selon l'une quelconque des revendications 9 à 11, **caractérisé en ce que** le système de commande (100) détermine de façon dynamique en service la fréquence de rotation des conteneurs (5).
